# EUROPÄISCHE PATENTSCHRIFT

(11) **EP 3 127 229 B1**
(45) Veröffentlichungstag und Bekanntmachung des Hinweises auf die Patenterteilung: **23.05.2018**
(21) Anmeldenummer: 15712134.4
(22) Anmeldetag: 25.03.2015
(51) Int. Cl.: H02M 3/158, H02M 1/44, H02M 3/07, H02J 3/38

(54) **SPREAD-SPECTRUM AMPLITUDEN MODULATION ZUR REDUKTION VON STÖREMISSIONEN EINES SCHALTWANDLERS**
SPREAD SPECTRUM AMPLITUDE MODULATION FOR REDUCING EMI EMISSIONS OF A SWITCHED MODE POWER CONVERTER
MODULATION AMPLITUDE A SPECTRE ETALE POUR RÉDUCTION D'INTERFÉRENCE ÉLECTROMAGNÉTIQUE (EMI) DANS UN CONVERTISSEUR À DÉCOUPAGE

(30) Priorität: 03.04.2014 DE 102014104730
(43) Veröffentlichungstag der Anmeldung: 08.02.2017
(73) Patentinhaber: SMA Solar Technology AG, 34266 Niestetal (DE)
(72) Erfinder: KNOBLOCH, Andreas, 34121 Kassel (DE)
(74) Vertreter: Lahnor, Peter
(86) Internationale Anmeldenummer: PCT/EP2015/056448
(87) Internationale Veröffentlichungsnummer: WO 2015/150195

(56) Entgegenhaltungen:
- EP-A1- 2 219 275
- AU-B2- 729 687
- US-A- 5 510 698
- ALEKSANDAR M STANKOVIC ET AL: "Randomized Modulation of Power Converters via Markov Chains", IEEE TRANSACTIONS ON CONTROL SYSTEMS TECHNOLOGY, IEEE SERVICE CENTER, NEW YORK, NY, US, Bd. 5, Nr. 1, 1. Januar 1997 (1997-01-01), XP011013810, ISSN: 1063-6536
- WANG A ET AL: "Random and programmed pulse-width modulation techniques for DC-DC converters", PROCEEDINGS OF THE INTERNATIONAL CONFERENCE ON SYSTEMS ENGINEERING. FAIRBORN, AUG. 1 - 3, 1991; [PROCEEDINGS OF THE INTERNATIONAL CONFERENCE ON SYSTEMS ENGINEERING], NEW YORK, IEEE, US, 9. August 1990 (1990-08-09), Seiten 589-592, XP032190970, DOI: 10.1109/ICSYSE.1990.203226 ISBN: 978-0-7803-0173-3 in der Anmeldung erwähnt
- MORI I ET AL: "EMI Reduction by Spread-Spectrum Clocking in Digitally-Controlled DC-DC Converters", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, Bd. E92A, Nr. 4, 1. April 2009 (2009-04-01), Seiten 1004-1011, XP001546691, ISSN: 0916-8508, DOI: 10.1587/TRANSFUN.E92.A.1004
- FRANC MIHALI ET AL: "Reduced Conductive EMI in Switched-Mode DC-DC Power Converters Without EMI Filters: PWM Versus Randomized PWM", IEEE TRANSACTIONS ON POWER ELECTRONICS, INSTITUTE OF ELECTRICAL AND ELECTRONICS ENGINEERS, USA, Bd. 20, Nr. 6, 1. November 2006 (2006-11-01), Seiten 1783-1794, XP011150087, ISSN: 0885-8993

## Beschreibung

### TECHNISCHES GEBIET DER ERFINDUNG

Die Erfindung bezieht sich auf ein Verfahren zur Reduktion von Störemissionen eines Strom- oder Spannungswandlers mit mindestens einem mit einem Ansteuersignal angesteuerten Leistungsschalter, wobei jedes Ansteuersignal untereinander beabstandete Einschaltpulse umfasst, wobei Pulsweiten der Einschaltpulse moduliert werden, um eine Vorgabe für einen Strom oder eine Spannung im bzw. am Strom- oder Spannungswandler zu erfüllen, und wobei die Pulsweiten zusätzlich schneller und stärker variiert werden, als es zum Erfüllen der Vorgabe dienlich ist, um das Spektrum der Störemissionen zu verändern. Anders gesagt wird einer Pulsweitenmodulation zur Erfüllung der jeweiligen Vorgabe eine zusätzliche Pulsweitenvariation überlagert, die als solche nicht dem Zweck dient, die jeweilige Vorgabe zu erfüllen, weil sie z. B. im Hinblick auf die Zeitkonstanten eines Regelkreises für die Pulsweitenmodulation zu schnell erfolgt und/oder in Bezug auf die Erfüllung der Vorgabe viel zu stark ist, weil so große Änderungen der Pulsweite für das Erreichen der Vorgabe nicht sinnvoll sind. Die überlagerte Pulsweitenvariation verändert das Spektrum der Störemissionen des Strom- oder Spannungswandlers, indem sie zu der und zu Lasten der das Spektrum dominierenden Taktfrequenz des Ansteuersignals zusätzliche Frequenzanteile hinzufügt.

Insbesondere bezieht sich die Erfindung auf ein solches Verfahren, bei dem Veränderungen der Pulsweiten bei ihrer zusätzlichen Variation gegenüber den Pulsweiten, die sich nur aufgrund ihrer Modulation zum Erfüllen der jeweiligen Vorgabe ergeben würden, auf Basis von aufeinander folgenden Gruppen von Veränderungen vorgenommen werden, die sich jeweils über eine vorgegebene Anzahl von aufeinander folgenden Einschaltpulsen erstrecken und in denen eine Summe der Veränderungen jeweils null ist.

Im Falle von mehreren mit mehreren Ansteuersignalen angesteuerten Leistungsschaltern handelt es sich bei den hier betrachteten aufeinander folgenden Einschaltpulsen um die Gesamtheit der Einschaltpulse für alle angesteuerten Leistungsschalter. Diese den verschiedenen Leistungsschaltern zugeordneten Einschaltpulse können sich anders als diejenigen eines einzelnen Ansteuersignals für einen einzelnen Leistungsschalter überlappen.

### STAND DER TECHNIK

Aus Andrew Wang und Seth R. Sanders: Random and Programmed Pulse-Width Modulation Techniques for DC-DC Converters, IEEE International Conference on Systems Engineering, 1990, ist ein Verfahren zur Reduktion von Störemissionen von DC/DC-Wandlern bekannt, bei dem zu jeder Pulsweite eine Gruppe von Ein- und Ausschaltzeiten von Einschaltpulsen in einer Nachschlagetabelle abgelegt ist. Zur Ansteuerung des jeweiligen Leistungsschalters wird die zum Erfüllen einer Vorgabe ermittelte Pulsweite verwendet, um aus der Nachschlagetabelle die zugeordnete Gruppe der Ein- und Ausschaltzeiten der Einschaltpulse auszulesen, mit der dann der Leistungsschalter angesteuert wird. Diese Gruppe wird solange wiederholt, wie sich an der für die Erfüllung der Vorgabe ermittelten Pulsweite nichts ändert. Die aus den Ein- und Ausschaltzeiten jeder Gruppe resultierenden Pulsweiten erfüllen das Kriterium, dass sie größer als null sind und im Mittel genauso lang sind wie die Pulsweite, unter der sie in der Tabelle abgelegt sind. Als Alternative wird beschrieben, die Pulsweiten, die ermittelt werden, um die jeweilige Vorgabe zu erfüllen, zufällig zu variieren, indem ein Ausgangssignal für das Ansteuersignal frequenzmoduliert wird. Es wird auch eine Kombination beider Verfahren beschrieben, d. h. eine Variation der Pulsweiten durch sich identisch wiederholende Gruppen von Einzelwerten zusammen mit einer Frequenzmodulation des Ausgangssignals für das Ansteuersignal. Die praktische Kombination der beiden Verfahren ist aber nicht problemlos, weil die zeitliche Abfolge für die Pulsweitenvorgaben in der jeweiligen Gruppe von der zufälligen Modulation der Frequenz des Ausgangssignals abhängt. Zudem bedeutet die Bereitstellung eines bezüglich seiner Frequenz zufällig modulierten Ausgangssignals einen erheblichen Aufwand. Weiterhin muss sichergestellt werden, dass die zufällige Modulation der Frequenz des Ausgangssignals nicht zu irgendwelchen Störungen des Betriebs des jeweiligen DC/DC-Wandlers führt, insbesondere wenn dieser mehrere Leistungsschalter aufweist.

Aus K.K. Tse et al.: A comparative investigation on the use of random modulation schemes for DC/DC converters, IEEE Transactions on Industrial Electronics, Vol. 47, No. 2, April 2000 sind verschiedene Verfahren bekannt, bei denen gegenüber einer üblichen Pulsweitenmodulation einzelne Größen eines Ansteuersignals zum Ansteuern eines Leistungsschalters eines DC/DC-Wandlers variiert werden. Bei der üblichen Pulsweitenmodulation (PWM) sind die Periodendauer, die absolute Pulsweite, die Lage der Pulse innerhalb der Periode des Ansteuersignals und das Pulsweitenverhältnis, d. h. der Quotient aus Pulsweite und Periodendauer, der auch als "Duty Cycle" bezeichnet wird, fest vorgegeben. Bei der Random Pulspositionsmodulation (RPPM) wird die Pulsposition zufällig variiert. Bei der Random Pulsweitenmodulation (RPWM) wird die Pulsweite und damit auch der Duty Cycle zufällig variiert. Bei der Random Trägerfrequenzmodulation mit festem Duty Cycle werden die Periodendauer und entsprechend die absolute Pulsweite zufällig variiert, während der Duty Cycle fest ist, und bei der Random Trägerfrequenzmodulation mit variablem Duty Cycle (RCFMVD) wird die Periodendauer zufällig variiert, und durch eine feste absolute Pulsweite ergibt sich ein zufällig variierter Duty Cycle. Auch bei diesen bekannten Verfahren ist jeweils die Bereitstellung einer zufälligen Variation, insbesondere eines zufällig variierten Trägersignals, aufwendig und problematisch.

Aus der US 2007/0025129 A1 sind Verfahren zur Pulsweitenmodulation bei einem DC/AC-Wandler zur Reduktion der Größe von Harmonischen bekannt. Die Pulsweitenmodulation verwendet ein Referenzsignal mit unregelmäßiger Periode. Diese unregelmäßige Periodizität weist eine Abfolge von Perioden auf, die gleichmäßig um eine Zielperiode verteilt sind. Das Vorgehen entspricht dabei der oben beschriebenen RCFMVD.

Aus der US 5,552,980 A ist ein DC/AC-Wandler bekannt, bei dem hochfrequent getaktete Leistungsschalter mit einem Ansteuersignal angesteuert werden, das mit Hilfe einer Dreiecksfunktion fester Frequenz und einem festen Vergleichswert erzeugt wird. Dabei wird ein anderer Wert der Dreiecksfunktion zufällig variiert, indem beispielsweise deren einzelnen Dreiecke asymmetrisch verformt werden.

Aus der US 2013/0119961 A1 sind DC/DC-Wandler mit sogenanntem fliegenden Kondensator bekannt. Bei einem entsprechenden Hochsetzsteller oder Tiefsetzsteller sind statt eines Leistungsschalters und einer Diode zwei in Reihe geschaltete Leistungsschalter bzw. zwei in Reihe geschaltete Dioden vorgesehen. Der fliegende Kondensator liegt zwischen den Mittelpunkten der Leistungsschalter und der Dioden. Bei einem Hochtiefsetzsteller ist der fliegende Kondensator entsprechend zwischen die Mittelpunkte einer ersten und einer zweiten Reihenschaltung von jeweils zwei Leistungsschaltern angeordnet. Die Ansteuerung der einzelnen Leistungsschalter erfolgt bei DC/DC-Wandlern mit fliegendem Kondensator einerseits zur Erfüllung der Vorgabe einer gewünschten Ausgangsspannung und andererseits mit dem Ziel, die Spannung über dem fliegenden Kondensator auf die Hälfte dieser Ausgangsspannung einzuregeln, um den Stromrippel über den Kondensator zu minimieren und die Bauteile des jeweiligen DC/DC-Wandlers minimal zu belasten. Wenn zum Erreichen der gewünschten Spannungsverhältnisse ein asymmetrisches Ansteuern der jeweils zwei in Reihe geschalteten Leistungsschalter des DC/DC-Wandlers mit fliegendem Kondensator erforderlich ist, treten Störemissionen bei bestimmten in fester Beziehung zu dieser Asymmetrie und der Schaltfrequenz stehenden Störfrequenzen auf.

Aus der EP 2 219 275 A1 ist ein DC/DC-Wandler mit einer Halbbrücke bekannt, die zwischen ihrem Mittelpunkt und ihren beiden Eingängen jeweils zwei in Reihe geschaltete Leistungsschalter aufweist. Die Mittelpunkte dieser Reihenschaltungen sind über einen fliegenden Kondensator miteinander verbunden. Eine Seite dieses fliegenden Kondensators ist hierbei über eine Reihenschaltung einer Diode und eines Widerstands mit einer Seite eines weiteren fliegenden Kondensator eines eingangsseitigen Hochsetzstellers verbunden.

Aus der DE 10 2006 014 898 A1 eine Schaltvorrichtung mit einem Schaltelement bekannt, wobei das Schaltelement in Abhängigkeit von einem Treibsignal ein-/ausgeschaltet wird und das Treibsignal durch Wiederholen eines Grundmusters eingestellt wird. Das Grundmuster besteht aus mehreren Treibpulsen, die gegenseitig unterschiedliche Intervalle zwischen Anstiegsflanken und gegenseitig unterschiedliche Intervalle zwischen Abfallflanken aufweisen. Dadurch sind die Schaltfrequenzen in dem Treibmuster auf mehrere Frequenzen verteilt oder gestreut und so im Durchschnitt abgesenkt.

In der US 5,510,698 A sowie in Stankovic et al: Randomized Modulation of Power Converters via Markov Chains, IEEE Transactions on Control Systems Technology, Vol. 5, No. 1, Januar 1997 sind Modulationsverfahren für DC/DC- und DC/AC-Konverter offenbart, bei denen mittels zufallsbasierter Modulation, die auf finiten Markov-Ketten basiert, das Leistungsspektrum von Störemissionen derart geformt wird, dass diskrete Harmonische effizient reduziert werden.

Aus Mori et al: EMI Reduction by Spread-Spectrum Clocking in Digitally-Controlled DC-DC Converters, IEICE Transactions on Fundamentals of Electronics, Communications and Computer Sciences, Vol. E92-A, No. 4, April 2009 sind Modulationsverfahren für digital gesteuerte DC/DC-Konverter zur Reduktion von elektromagnetischen Emissionen bekannt, bei denen mittels sogenanntem Spread-Spectrum Clocking die Position eines Einschaltpulses innerhalb einer Taktperiode des Konverters und/oder die Länge der Taktperiode modifiziert wird.

Aus Mihali et al: Reduced Conductive EMI in Switched-Mode DC-DC Power Converters without EMI Filters: PWM Versus Randomized PWM, IEEE Transactionson Power Electronics, Vol. 21, No. 6, November 2006 sind verschiedene Modulationsverfahren für getaktete DC/DC-Konverter bekannt, wobei die Modulationsverfahren einen zufallsbasierten Anteil aufweisen, der sich auf die Position von Einschaltpulsen innerhalb einer Taktperiode, auf die Länge von Einschaltpulsen und/oder auf die Länge einer Taktperiode auswirkt, so dass dominierende Spektralanteile über einen größeren Frequenzbereiche verschmiert werden.

### AUFGABE DER ERFINDUNG

Der Erfindung liegt die Aufgabe zugrunde, ein Verfahren zur Reduktion von Störemissionen eines Strom- oder Spannungswandlers mit mindestens einem mit einem Ansteuersignal angesteuerten Leistungsschalter aufzuzeigen, das ohne Erzeugung zufälliger Variationen auskommt und dennoch in der Lage ist, das Spektrum der Störemissionen erheblich zu verändern. Insbesondere soll das erfindungsgemäße Verfahren zur Anwendung an Wandlern mit fliegendem Kondensator geeignet sein, um die im asymmetrischen Betrieb der jeweiligen in Reihe geschalteten Leistungsschalter auftretenden Störemissionen zu reduzieren.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Die Erfindung geht von einem Verfahren zur Reduktion von Störemissionen eines Strom- oder Spannungswandlers mit mindestens einem mit einem Ansteuersignal angesteuerten Leistungsschalter aus, wobei jedes Ansteuersignal untereinander beabstandete Einschaltpulse umfasst und eine feste Taktfrequenz aufweist. Die Pulsweiten der Einschaltpulse werden moduliert, um eine Vorgabe für einen Strom oder eine Spannung im bzw. am Strom- oder Spannungswandler zu erfüllen. Zusätzlich werden die Pulsweiten schneller und stärker variiert, als es zum Erfüllen der Vorgabe dienlich ist, um das Spektrum der Störemissionen zu verändern. Veränderungen der Pulsweiten bei ihrer zusätzlichen Variation gegenüber den Pulsweiten, die sich nur aufgrund ihrer Modulation zum Erfüllen der Vorgabe ergeben würden, werden auf Basis von aufeinander folgenden Gruppen von Veränderungen vorgenommen, die sich jeweils über eine vorgegebene Anzahl von aufeinander folgenden Einschaltpulsen erstrecken und in denen eine Summe der Veränderungen jeweils null ist. Erfindungsgemäß werden die aufeinander folgenden Gruppen von Veränderungen hinsichtlich mindestens eines Aspekts variiert, der aus Beträgen der Veränderungen, Vorzeichen der Veränderungen, einer Reihenfolge der Veränderungen und einer Erstreckung der Gruppe ausgewählt ist. Dies impliziert, dass bei dem erfindungsgemäßen Verfahren nicht nur eine einzelne Gruppe von Veränderungen, die zu den Pulsweiten passt, welche sich nur aufgrund ihrer Modulation zum Erfüllen der Vorgabe ergeben würden, periodisch wiederholt wird. Zudem ist weder eine zufällige Modulation einer Ausgangsfunktion des jeweiligen Ansteuersignals erforderlich, noch eine sonstige zufällige Variation.

Wenn bei der vorliegenden Erfindung die Beträge der Veränderungen zwischen den aufeinander folgenden Gruppen von Veränderungen variiert werden, kann dies insbesondere bedeuten, dass die Veränderungen der Pulsweiten zweier aufeinander folgender Gruppen zwar einem grundsätzlich gleichem Muster folgen, aber unterschiedlich sind.

Wenn bei der vorliegenden Erfindung die Vorzeichen der Veränderungen variiert werden, so bedeutet dies, dass die Richtung der Variation zwischen aufeinander folgenden Gruppen von Veränderungen geändert wird. So können allen Verkürzungen der Pulsweiten bei einer Gruppe an den entsprechenden Positionen der nächsten Gruppe Verlängerungen der Pulsweiten folgen.

Wenn die Reihenfolge der Veränderungen in der Gruppe variiert wird, können die Veränderungen zweier aufeinander folgender Gruppen grundsätzlich gleich sein, aber in unterschiedlicher Abfolge auftreten.

Gruppen unterschiedlicher Erstreckung sind Gruppen, in denen unterschiedlich viele Einschaltpulse aufeinander folgen, bis die Summe der Veränderungen null ist. Dabei ist anzumerken, dass sich das Merkmal, nach dem die Summe der Veränderungen in jeder Gruppe null ist, bei mehreren Leistungsschaltern und entsprechend mehreren Einschaltpulse umfassenden Ansteuersignalen primär für die Gesamtheit der Einschaltpulse gilt. Darüber hinaus können auch die Einschaltpulse für jeden der Leistungsschalter Veränderungen aufweisen, die sich zu null aufsummieren. Dies kann aber auch erst nach mehreren aufeinander folgenden Gruppen der Veränderungen der Fall sein.

Bevorzugt sind solche Ausführungsformen der vorliegenden Erfindung, bei denen die Veränderungen der Pulsweiten zwischen jeweils zwei aufeinander folgenden Gruppen gemäß dem mindestens einen der oben genannten Aspekte variiert werden und über mehrer Gruppen hinweg zudem eine Variation bezüglich eines weiteren der oben genannten Aspekte erfolgt. Bei diesen beiden Aspekten kann es sich insbesondere um die beiden ersten Aspekte, d. h. die Variation der Beträge der Veränderungen zwischen jeweils zwei aufeinander folgenden Gruppen und der Vorzeichen der Veränderungen über mehrer Gruppen hinweg, handeln. Dabei kann sich jede Gruppe der Veränderungen über eine gleiche Anzahl von aufeinander folgenden Einschaltpulsen erstrecken, so dass die Erstreckung der Gruppen gleich bleibt. Auch die Reihenfolge der Veränderungen kann, bis auf den Vorzeichenwechsel, gleich bleiben.

Konkret können sich die aufeinander folgenden Gruppen der Veränderungen ausschließlich durch einen Skalierungsfaktor voneinander unterscheiden. Das heißt, die Veränderungen der aufeinander folgenden Gruppen sind durch Anwendung dieses Skalierungsfaktors paarweise ineinander überführbar, wobei ein Vorzeichenwechsel des Skalierungsfaktors auch zu einem Vorzeichenwechsel bei den Veränderungen führt.

In einer Ausführungsform des erfindungsgemäßen Verfahrens wird der Skalierungsfaktor, um den sich die Veränderungen der aufeinander folgenden Gruppen der Veränderungen voneinander unterscheiden, durch eine zeitlich variable Variationsführungsfunktion vorgegeben. Es versteht sich, dass die zeitliche Variabilität der Variationsführungsfunktion auf die Erstreckung der Gruppen der Veränderungen so abgestimmt wird, dass sich der Skalierungsfaktor zwischen den Gruppen ändert, und dies über eine größere Anzahl von Gruppen hinweg. Mit anderen Worten ist dann, wenn die Variationsführungsfunktion periodisch ist, ihre Periodenlänge um ein vielfaches länger als die einzelnen Gruppen der Veränderungen der Pulsweite.

Insbesondere kann die Variationsführungsfunktion einen Mittelwert von null aufweisen. Hieraus resultieren sowohl positive als auch negative Skalierungsfaktoren. Mit negativen Skalierungsfaktoren werden die Vorzeichen der Veränderungen in den entsprechenden Gruppen von Veränderungen gegenüber denjenigen mit positiven Skalierungsfaktoren umgekehrt. Als Variationsführungsfunktion kommt insbesondere eine Sinus- oder Dreiecksfunktion in Frage. Die Frequenz der Variationsführungsfunktion tritt in dem veränderten Spektrum der Störemissionen zusätzlich auf. Sie weist jedoch üblicherweise einen großen Abstand zu den anderen, bei höheren Frequenzen liegenden Peaks im Spektrum der Störemissionen auf.

Die erfindungsgemäße Variation der Veränderungen der Pulsweiten zwischen aufeinander folgenden Gruppen von Veränderungen erstreckt sich über mindestens zwei aufeinander folgende Gruppen, wobei bei genau zwei Gruppen die dritte Gruppe wieder gleich der ersten sein könnte. Vorzugsweise erstreckt sich die Variation der Gruppen über eine Vielzahl von Gruppen, wie beispielsweise 5 bis 50 Gruppen. Auch eine Ausdehnung über 100 aufeinander folgende Gruppen ist möglich. Häufig wird jedoch mit einer sehr großen Anzahl von Gruppen, über die sich die Variation des Gruppen verteilt, kein nutzbarer Effekt in Bezug auf das Verändern des Spektrums der Störemissionen erzielt, weil die Variation der Veränderungen der Pulsweiten zwischen zwei direkt aufeinander folgenden Gruppen von Veränderungen dann nur noch sehr klein ausfällt.

Bei nur einem zum Erfüllen der Vorgabe angesteuerten Leistungsschalter liegt die Anzahl der aufeinander folgenden Einschaltpulse jeder Gruppe der Veränderungen in einem typischen Bereich von zwei bis zehn. Größere Erstreckungen der einzelnen Gruppen sind möglich, aber in der Regel nicht mit zusätzlichen nutzbaren Effekten auf die Veränderung des Spektrums der Störemissionen verbunden.

Wenn mehrere Leistungsschalter aufeinander abgestimmt zum Erfüllen der jeweiligen Vorgabe angesteuert werden, gilt hinsichtlich der Erstreckung jeder einzelnen Gruppe, dass die Anzahl der aufeinander folgenden Einschaltpulse der Gruppe gleich einer Anzahl der Leistungsschalter oder einem ganzzahligen Vielfaches davon ist. Bei zwei Leistungsschaltern heißt das, dass sich jede Gruppe über zwei, vier, sechs oder eine größere gerade Anzahl von Einschaltpulsen erstreckt. Jedes der beteiligten Steuersignale trägt also ein oder jedenfalls eine gleiche Zahl von Einschaltpulsen bei.

Konkret kann bei mehreren zum Erfüllen der Vorgabe angesteuerten Leistungsschaltern die Anzahl der aufeinander folgenden Einschaltpulse jeder Gruppe der Veränderungen gleich dem 1- bis 5-fachen der Anzahl der Leistungsschalter sein. Dadurch resultieren vergleichsweise kompakte Gruppen der Veränderungen, über die hinweg zwar nur eine begrenzte Einflussmöglichkeit auf das Spektrum der Störemissionen gegeben ist. Durch die zusätzliche Variation der Veränderungen zwischen den aufeinander folgenden Gruppen wird das Spektrum der Störemissionen aber zusätzlich verändert.

In einer Ausführungsform des erfindungsgemäßen Verfahrens sind die mehreren zum Erfüllen der Vorgabe angesteuerten Leistungsschalter Leistungsschalter von parallel geschalteten und im Interleavingmode betriebenen Teilwandlern eines Wandlers. Dabei können in einer Gruppe von Veränderungen z. B. bestimmte Wandler weniger zu einem ausgegebenen Strom beitragen als andere Wandler, und im Rahmen der Variation der Veränderungen zwischen aufeinander folgenden Gruppen kann dieses Verhältnis modifiziert und dabei auch umgekehrt werden.

In einer anderen Ausführungsform des erfindungsgemäßen Verfahrens sind zwei zum Erfüllen der Vorgabe angesteuerte Leistungsschalter Leistungsschalter einer Halbbrücke mit fliegendem Kondensator. Eine Halbbrücke mit fliegendem Kondensator weist insgesamt vier Leistungsschalter auf, von denen jeweils zwei zwischen einem der Eingänge der Halbbrücke und ihrem Mittelpunkt in Reihe geschaltet sind, wobei die Mittelpunkte der Reihenschaltungen durch den fliegenden Kondensator miteinander verbunden sind. Von diesen vier Leistungsschaltern werden im Betrieb der Halbbrücke zur Formung eines Wechselstroms halbwellenweise jeweils die zwei Leistungsschalter einer Reihenschaltung höherfrequent getaktet, wobei das erfindungsgemäße Verfahren zur Anwendung kommt. Wenn ein asymmetrisches Ansteuern der beiden höherfrequent getakteten Leistungsschalter erforderlich ist, um die Spannung über dem fliegenden Kondensator auf einem gewünschten Wert zu halten, führt die erfindungsgemäße Variation der Pulsweiten dazu, dass das Spektrum der Störemissionen nicht nur wenige Peaks aufweist, sondern breiter ausgeschmiert ist.

Dasselbe gilt dann, wenn zwei zum Erfüllen der Vorgabe bei dem erfindungsgemäßen Verfahren angesteuerte Leistungsschalter die beiden Leistungsschalter eines DC/DC-Wandlers mit fliegendem Kondensator sind, insbesondere eines Hochsetz- und/oder Tiefsetzstellers.

Bei einem solchen DC/DC-Wandler mit fliegendem Kondensator können die Veränderungen innerhalb einer Gruppe von Veränderungen jeweils einen gleichen Betrag und ein wechselndes Vorzeichen aufweisen. Hieraus resultiert dann insgesamt ein Verfahren zur Reduktion von Störemissionen von zwei Leistungsschaltern eines DC/DC-Wandlers mit fliegendem Kondensator, wobei die Leistungsschalter jeweils mit einem Ansteuersignal angesteuert werden, das untereinander beabstandete Einschaltpulse umfasst, wobei Pulsweiten der Einschaltpulse moduliert werden, um eine Vorgabe für einen Strom oder eine Spannung zu erfüllen, wobei die Pulsweiten zusätzlich schneller oder stärker variiert werden, als es zum Erfüllen der Vorgabe dienlich ist, um das Spektrum der Störemissionen zu verändern, wobei Veränderungen der Pulsweiten bei ihrer zusätzlichen Variation gegenüber den Pulsweiten, die sich nur aufgrund ihrer Modulation zum Erfüllen der Vorgabe ergeben würden, auf Basis von aufeinander folgenden Gruppen von Veränderungen vorgenommen werden, die sich jeweils über eine vorgegebene Anzahl von aufeinander folgenden Einschaltpulsen erstrecken und in denen eine Summe der Veränderungen jeweils null ist, wobei sich jede Gruppe von Veränderungen über zwei bis zehn aufeinander folgende Einschaltpulse des Ansteuersignals erstreckt, wobei die Veränderungen innerhalb jeder Gruppe jeweils einen gleichen Betrag und ein wechselndes Vorzeichen aufweisen und wobei sich der Betrag der Veränderungen bei aufeinander folgenden Gruppen der Veränderungen durch einen Skalierungsfaktor unterscheidet, der durch eine zeitlich variable Variationsführungsfunktion vorgegeben wird, die einen Mittelwert von null aufweist.

Eine Pulsposition der Einschaltpulse innerhalb einer Taktperiode des jeweiligen Ansteuersignals ist ebenfalls vorzugsweise fest, so dass mit einem einfachen üblichen dreieckförmigen Ausgangssignal gearbeitet werden kann. Grundsätzlich kann aber die Pulsposition der Einschaltpulse zusätzlich variiert werden, wobei sie jedoch auch dann im zeitlichen Mittel fest bleibt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Elemente können durch weitere Merkmale ergänzt werden oder die einzigen Elemente sein, auf die sich das jeweilige Verfahren bezieht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand von in den Figuren dargestellten bevorzugten Ausführungsbeispielen weiter erläutert und beschrieben.
- **Fig. 1**: zeigt als Beispiel für eine Schaltung mit zwei Leistungsschaltern, an der das erfindungsgemäße Verfahren zur Anwendung kommen kann, einen an einen Photovoltaikgenerator angeschlossenen Hochsetzsteller mit fliegendem Kondensator.
- **Fig. 2**: zeigt den zeitlichen Verlauf eines durch eine Drossel des Hochsetzstellers gemäß Fig. 1 fließenden Stroms, wenn seine beiden Leistungsschalter symmetrisch, d. h. mit gleichen Pulsweiten, getaktet werden.
- **Fig. 3**: zeigt ein Spektrum von Störemissionen, die von dem Hochsetzsteller gemäß Fig. 1 ausgehen, wenn seine beiden Schalter so wie in Fig. 2 symmetrisch getaktet werden.
- **Fig. 4**: zeigt den zeitlichen Verlauf des durch die Drossel des Hochsetzstellers gemäß Fig. 1 fließenden Stroms, wenn seine beiden Leistungsschalter asymmetrisch getaktet werden, d. h. mit Pulsweiten unterschiedlicher Länge, wobei die Veränderungen der Pulsweiten gegenüber einer symmetrischen Ansteuerung beider Leistungsschalter zeitlich moduliert werden.
- **Fig. 5**: zeigt ein Spektrum von Störemissionen des Hochsetzstellers gemäß Fig. 1 bei derselben Ansteuerung seiner Leistungsschalter, wie sie zu dem Strom gemäß Fig. 4 führt.
- **Fig. 6**: zeigt einen Tiefsetzsteller mit fliegendem Kondensator als weitere Ausführungsform einer Schaltung mit zwei Leistungsschaltern, bei der das erfindungsgemäße Verfahren zur Anwendung kommen kann.
- **Fig. 7**: zeigt einen DC/AC-Wandler mit einer Halbbrücke mit fliegendem Kondensator als weitere Ausführungsform einer Schaltung mit Leistungsschaltern, bei dem das erfindungsgemäße Verfahren zur Anwendung kommen kann; und
- **Fig. 8**: zeigt einen Hochsetzsteller mit vier parallel geschalteten Teilwandlern als weitere Ausführungsform einer Schaltung mit Leistungsschaltern, bei der das erfindungsgemäße Verfahren zur Anwendung kommen kann.

### BESCHREIBUNG DER ERFINDUNG

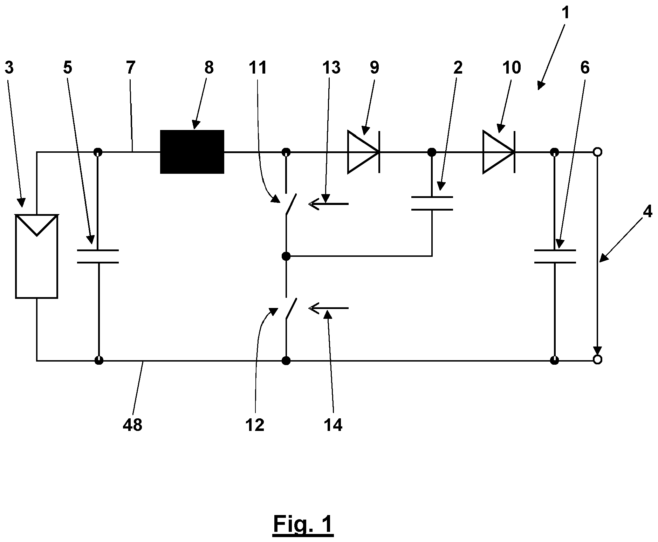

**Fig. 1** zeigt einen Hochsetzsteller 1 mit fliegendem Kondensator 2, der an einen Photovoltaikgenerator 3 als Gleichspannungsquelle angeschlossen ist und der eine Ausgangsgleichspannung 4 bereitstellt. Der Hochsetzsteller 1 weist einen eingangsseitigen Zwischenkreiskondensator 5 und einen ausgangsseitigen Zwischenkreiskondensator 6 auf. Dazwischen ist in einer Leitung 7 eine Drossel 8 mit einer Hochsetzstellerdiode 9 sowie einer weiteren Hochsetzstellerdiode 10 in Reihe geschaltet. Zwischen der Drossel 8 und der Hochsetzstellerdiode 9 zweigt eine Reihenschaltung aus zwei Leistungsschaltern in Form eines Hochsetzstellerschalters 11 und eines weiteren Hochsetzstellerschalters 12 zu einer anderen die Zwischenkreiskondensatoren 5 und 6 verbindenden Leitung 48 ab. Der Mittelpunkt der beiden Hochsetzstellerdioden 9 und 10 ist über den fliegenden Kondensator 2 mit dem Mittelpunkt der beiden Hochsetzstellerschalter 11 und 12 verbunden. Im Betrieb des Hochsetzstellers 1 werden die beiden Hochsetzstellerschalter 11 und 12 durch Ansteuersignale 13 und 14 gegenphasig angesteuert, d. h. um 180° phasenversetzt getaktet. Dabei erfolgt die Ansteuerung unter den Vorgaben, dass eine gewünschte Ausgangsgleichspannung 4 bei der von dem Photovoltaikgenerator 3 aktuell bereitgestellten Eingangsgleichspannung erreicht wird und dass die über dem fliegenden Kondensator 2 abfallende Gleichspannung halb so groß ist wie die Ausgangsgleichspannung 4. Um den Hochsetzsteller 1 in diesem balancierten Zustand, d. h. in dem Zustand, in dem die halbe Ausgangsgleichspannung 4 über dem fliegenden Kondensator 2 abfällt, zu halten, werden die Hochsetzstellerschalter 11 und 12 symmetrisch, d. h. mit gleichen Pulsweiten, angesteuert.

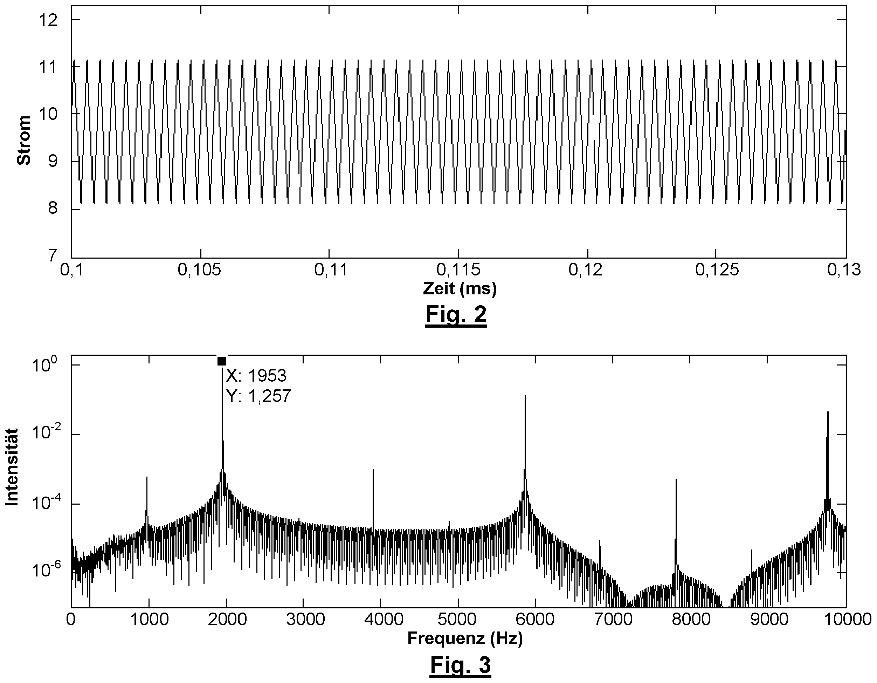

Der zeitliche Verlauf des daraus resultierenden Stroms, der durch die Drossel 8 des Hochsetzstellers 1 fließt, ist in **Fig. 2** gezeigt. Dabei entspricht jede aufsteigende Flanke des Stroms einem Zeitraum, in dem einer der beiden Hochsetzstellerschalter 11 und 12 gemäß Fig. 1 leitend ist, wobei unter der Voraussetzung nicht-überlappender Ansteuersignale 13 und 14 jeder Peak des Stroms dem Zeitpunkt entspricht, an dem einer der beiden Hochsetzstellerschalter 11 und 12 in den nicht-leitenden Zustand wechselt. Da beide Hochsetzstellerschalter 11 und 12 für gleiche Zeiten geschlossen werden, sind alle Peaks gleich groß.

Das resultierende Spektrum der von dem Hochsetzsteller 1 ausgehenden Störemissionen, das in **Fig. 3** gezeigt ist, weist ausgeprägte Peaks der Intensität der Störemissionen bei dem Doppelten der auf die einzelnen Hochsetzstellerschalter 11 und 12 bezogenen Taktfrequenz von 1.000 Hz, hier also bei 2.000 Hz, und bei höheren Harmonischen der doppelten Taktfrequenz, hier bei 6.000 und 10.000 Hz, auf. Demgegenüber ist der Peak bei der Taktfrequenz von 1.000 Hz, mit der die Hochsetzstellerschalter 11 und 12 gemäß Fig. 2 angesteuert werden, gering ausgeprägt. Die doppelte Taktfrequenz des höchsten Peaks gemäß Fig. 3 entspricht der Frequenz des Rippels des in Fig. 2 aufgetragenen Stroms.

Wenn die beiden Hochsetzstellerschalter 11 und 12 mit den Ansteuersignalen 13 und 14 angesteuert werden, deren Einschaltpulse ungleiche Pulsweiten aufweisen, so wird hierdurch das Spektrum der Störemissionen verändert. Konkret treten zusätzliche Spektralanteile auf, die von einer Veränderung Δd abhängen, die angibt, um wie viel die Pulsweiten beim Ansteuern der beiden Hochsetzstellerschalter 11 und 12 gegenüber einer mittleren Pulsweite der Einschaltpulse geändert sind. Dabei kann durch gleiche Beträge und umgekehrte Vorzeichen dieser Veränderungen Δd für beide Hochsetzstellerschalter 11 und 12 dafür gesorgt werden, dass der von dem Hochsetzsteller 1 während jeder Taktperiode der Ansteuersignale 13 und 14 ausgegebene Strom unverändert bleibt. Konstante Beträge und fest umgekehrte Vorzeichen der Veränderungen Δd führen jedoch dazu, dass sich die Spannung über dem fliegenden Kondensator 2 verändert und der Hochsetzsteller 1 seinen gewünschten balancierten Zustand verlässt. Wenn jedoch die Veränderungen Δd der Pulsweiten für die Ansteuerung der Hochsetzstellerschalter 11 und 12 mit einer Variationsführungsfunktion zeitlich moduliert werden, deren Mittelwert null ist, kann der balancierte Zustand des Hochsetzstellers 1 im zeitlichen Mittel beibehalten werden. Zudem wird durch die zeitliche Variation der Veränderungen Δd die Veränderung des Spektrums der Störemissionen, insbesondere eine Reduktion der Amplituden der Peaks bei den Vielfachen der Taktfrequenz, nicht nur durch neue Spektralanteile bei festen Frequenzen, sondern in ausgedehnten Frequenzbereichen erreicht.

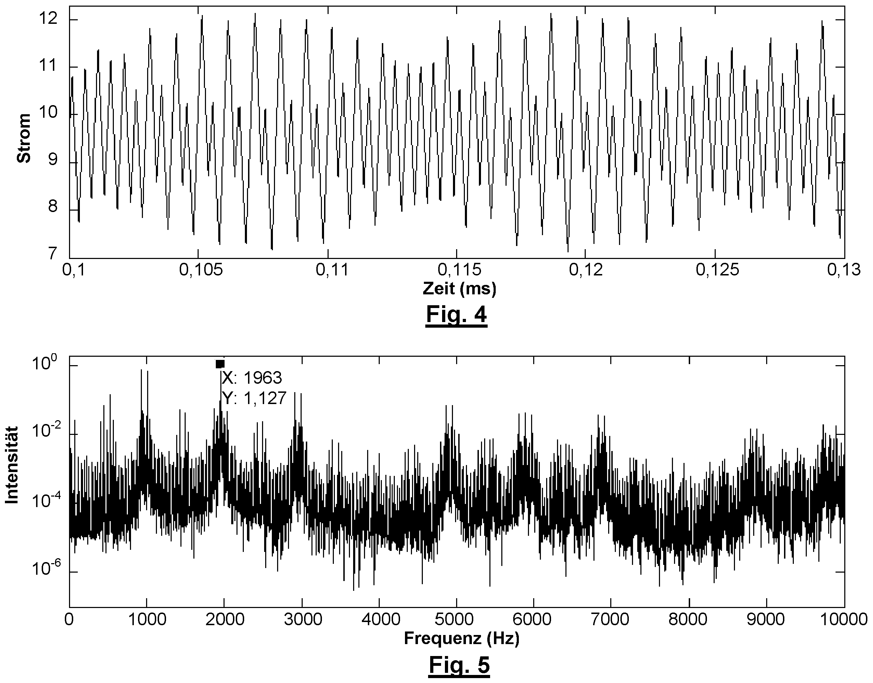

**Fig. 4** zeigt den zeitlichen Verlauf des Stroms, der durch die Drossel 8 des Hochsetzsteller 1 gemäß Fig. 1 fließt, wenn eine Veränderung Δd, die die Pulsweiten des jeweils einen Hochsetzstellerschalters 11 und 12 gemäß Fig. 1 verkürzt und die des jeweils anderen Hochsetzstellerschalters 12 bzw. 11 gemäß Fig. 1 verlängert, mit einer Sinusfunktion als Variationsführungsfunktion variiert wird. Vorübergehend sind entsprechend die Einschaltzeiten des einen Hochsetzstellerschalters 11, 12 länger und die des anderen Hochsetzstellerschalters 12 bzw. 11 kürzer und umgekehrt, wobei sich entsprechende Strompeaks ausbilden. Anders gesagt spiegeln die in Fig. 4 wiedergegebenen unterschiedlichen Peakhöhen direkt aufeinander folgender Peaks des Stroms die unterschiedlichen Pulsweiten der Einschaltpulse der Ansteuersignale 13 und 14 wider. Dabei ist zu erkennen, dass jeweils einer von zwei direkt aufeinander folgenden Peaks gegenüber den Peaks gemäß Fig. 2 erhöht ist, weil die entsprechende Pulsweite um Δd vergrößert ist, während der nachfolgende Peak erniedrigt ist, weil die entsprechende Pulsweite um Δd verringert ist. Dabei kehrt sich das Vorzeichen dieser Veränderungen der Pulsweiten zwischen den Ansteuersignalen 13 und 14 mit den Halbwellen der Variationsführungsfunktion um. Dieses Konzept ist sehr einfach umzusetzen, indem die Vorgaben für die Pulsweiten der Einschaltpulse der Ansteuersignale 13 und 14 additiv mit dem Variationsführungssignal überlagert werden, wobei das Variationsführungssignal für das eine Ansteuersignal 13 oder 14 mit positivem und für das eine Ansteuersignal 14 bzw. 13 mit negativem Vorzeichen addiert wird.

Trotz der grundsätzlich gleichen Frequenzen des Rippels des Stroms gemäß Fig. 4 und des Rippels des Stroms gemäß Fig. 2 ist das resultierende Spektrum der Störemissionen, das in **Fig. 5** gezeigt ist, gegenüber Fig. 3 grundsätzlich verändert. Die Intensitäten der Störemissionen sind gleichmäßiger über das Spektrum gemäß Fig. 5 verteilt. Die absolute Höhe des Peaks bei der doppelten Schaltfrequenz ist zurückgegangen. Keiner der Peaks bei den höheren Harmonischen der doppelten Schaltfrequenz erreicht das Niveau wie in Fig. 3. Dafür tritt der Spektralbereich um die Schaltfrequenz bei 1.000 Hz und dem dreifachen der Schaltfrequenz bei 3.000 Hz deutlicher hervor. Durch diese Veränderungen des Spektrums der Störemissionen kann z. B. erreicht werden, dass störende Interferenzen mit anderen Schaltkreisen beseitigt werden.

Aus der Darstellung des Verlaufs des Stroms gemäß Fig. 4 wird deutlich, dass die Variationsführungsfunktion die Pulsweiten zum Ansteuern der Hochsetzstellerschalter 11 und 12 und damit deren Einschaltzeiten viel stärker und auch schneller moduliert als es für eine sinnvolle Pulsweitenmodulation zum Einstellen der gewünschten Ausgangsspannung 4 des Hochsetzstellers 1 gemäß Fig. 1 und zum Erreichen bzw. Beibehalten seines balancierten Zustands sinnvoll wäre. Gerade deshalb macht sich die zur Veränderung des Spektrums der Störemissionen durchgeführte Variation der Pulsweiten nicht als Störung der Funktion des Hochsetzstellers 1 bemerkbar. Zudem ist die Summe der Veränderungen Δd bereits nach zwei aufeinander folgenden Einschaltpulsen null, weil der eine Hochsetzstellerschalter 11 oder 12 jeweils gerade um so viel gegenüber der mittleren Pulsweite länger eingeschaltet wird wie der andere Hochsetzstellerschalter 12 bzw. 11 kürzer einschaltet wird. Die Periodendauer der Variationsführungsfrequenz entspricht hier dem 12-fachen der Taktfrequenz, bei der jeder der Hochsetzstellerschalter 11 und 12 mit den Ansteuersignalen 13 und 14 angesteuert wird.

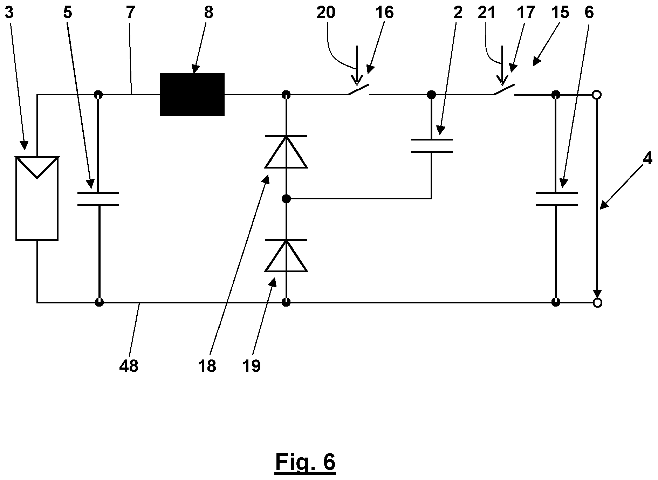

**Fig. 6** zeigt einen Tiefsetzsteller 15 mit fliegendem Kondensator 2. Hier sind gegenüber einer üblichen Tiefsetzstellerschaltung zwei miteinander in Reihe geschaltete Tiefsetzstellerschalter 16 und 17 und zwei miteinander in Reihe geschaltete Tiefsetzstellerdioden 18 und 19 vorgesehen, wobei der Mittelpunkt der Tiefsetzstellerschalter 16 und 17 über den fliegenden Kondensator 2 mit dem Mittelpunkt der Tiefsetzstellerdioden 18 und 19 verbunden ist. Anders gesagt sind gegenüber der Schaltung des Hochsetzstellers 1 gemäß Fig. 1 die Schalter mit den Dioden vertauscht. Auch bei einem Tiefsetzsteller 15 mit fliegendem Kondensator 2 ergibt sich die doppelte Vorgabe für die Ansteuerung der Tiefsetzstellerschalter 16 und 17, eine gewünschte Ausgangsspannung 5 einzustellen und die über den fliegenden Kondensator 2 abfallende Spannung auf die Hälfte dieser Ausgangsspannung 5 zu bringen und dort zu halten. Um dabei das Spektrum der Störemissionen, die von dem Tiefsetzsteller 15 ausgehen, zu verändern, um z. B. die spektrale Intensität über einen größeren Frequenzbereich zu verteilen, können die Pulsweiten von Ansteuersignalen 20 und 21, mit denen die Tiefsetzstellerschalter 16 und 17 angesteuert werden, in derselben Weise variiert werden, wie dies anhand von Fig. 4 für den Hochsetzsteller 1 gemäß Fig. 1 erläutert wurde.

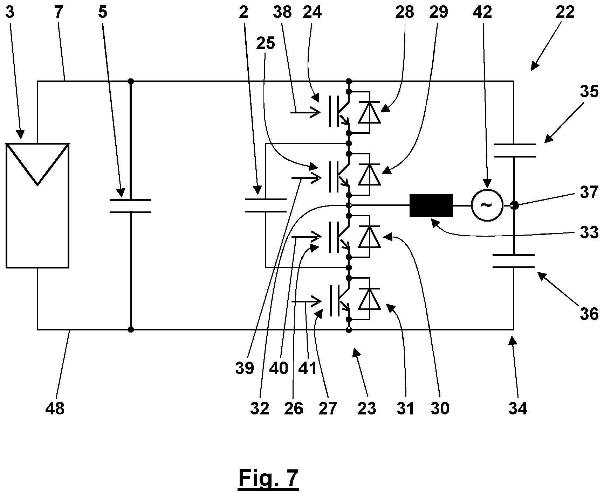

**Fig. 7** zeigt einen DC/AC-Wandler 22 mit einem fliegenden Kondensator 2. Der DC/AC-Wandler 22 wandelt eine von einem Photovoltaikgenerator 3 bereitgestellte Eingangsgleichspannung in eine Ausgangswechselspannung 42 um. Dabei kann zwischen den Photovoltaikgenerator 3 und einen eingangsseitigen Zwischenkreiskondensator 5 ein DC/DC-Wandler geschaltet sein, um die über dem Zwischenkreiskondensator 5 abfallende Spannung auch bei variierender Eingangsgleichspannung von dem Photovoltaikgenerator 3 konstant zu halten. Dieser bei einem Photovoltaikwechselrichter häufig vorhandene DC/DC-Wandler ist hier jedoch nicht dargestellt. Der DC/AC-Wandler 22 weist eine Halbbrücke 23 aus Halbleiterleistungsschaltern 24 bis 27 mit Freilaufdioden 28 bis 31 auf. Dabei sind jeweils zwei Halbleiterleistungsschalter zwischen einen Mittelpunkt 32 der Halbbrücke 23 und einer der Leitungen 7 und 48, zwischen denen die Eingangsgleichspannung anliegt, in Reihe geschaltet. Die Mittelpunkte dieser Reihenschaltungen sind über den fliegenden Kondensator 2 miteinander verbunden. An den Mittelpunkt 32 der Halbbrücke 23 ist eine Drossel 33 angeschlossen, über die die Ausgangswechselspannung 42 ausgegeben wird. Eine zweite Halbbrücke 34 des DC/AC-Wandlers 22 ist aus Kondensatoren 35 und 36 aufgebaut, deren Mittelpunkt 37 der andere Ausgabepunkt der Ausgangswechselspannung 42 ist. Um einen Wechselstrom, der über die Drossel 33 ausgegeben wird, zu formen, werden halbwellenweise die beiden Halbleiterleistungsschalter 24 und 25 bzw. 26 und 27 auf den beiden Seiten des Mittelpunkts 32 höherfrequent getaktet. Dabei erfolgt eine Pulsweitenmodulation zum Erfüllen der Vorgaben der Stromformung und der Einstellung der über dem fliegenden Kondensator 2 abfallenden Spannung, die hier halb so groß sein soll wie die über der Halbbrücke 34 aus den Kondensatoren 35 und 36 abfallende Spannung. Die aus dieser Pulsweitenmodulation resultierenden Pulsweiten der Einschaltpulse von Ansteuersignalen 38 und 39 bzw. 40 und 41 für die Leistungshalbleiterschalter 24 und 25 bzw. 26 und 27 werden während jeder Periode der Taktsignale entsprechend Fig. 4 variiert, wobei die Veränderungen der Pulsweiten während jeder Periode der Taktsignale in der Summe null ergeben und wobei diese Veränderungen mit Hilfe eines Skalierungsfaktors, der einer zeitlich variablen Variationsführungsfunktion mit einem Mittelwert von null folgt, wie in Fig. 4 variiert werden. Auch hierdurch ergibt sich die gewünschte Veränderung des Spektrums der Störemissionen des DC/AC-Wandlers 22, ohne dessen grundsätzliche Funktion zu beeinträchtigen und damit auch ohne seinen ausbalancierten Zustand zu verlassen.

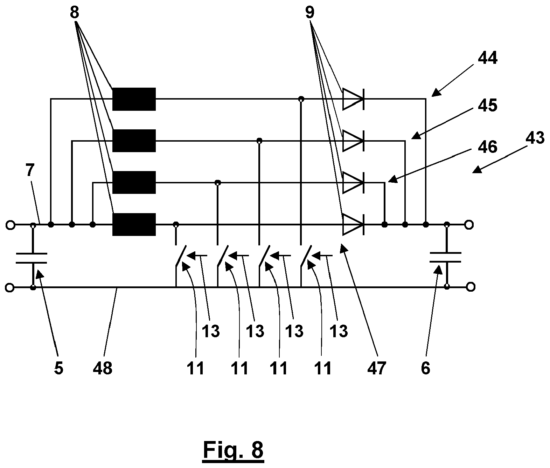

**Fig. 8** zeigt einen Hochsetzsteller 43 mit vier Teilwandlern 44 bis 47. Alle vier Teilwandler 44 bis 47 sind parallel zueinander zwischen einen eingangsseitigen Zwischenkreiskondensator 5 und einen ausgangsseitigen Zwischenkreiskondensator 6 geschaltet. Sie weisen in üblicher Anordnung jeweils eine Drossel 8, eine damit in der Leitung 7 in Reihe geschaltete Hochsetzstellerdiode 9 und einen dazwischen zu der anderen Leitung 48 führenden Hochsetzstellerschalter 11 auf. Die einzelnen Teilwandler 44 bis 47 des Hochsetzstellers 43 werden in einem sogenannten Interleavingmode betrieben, um einen Rippel des von dem Hochsetzsteller 43 insgesamt aus dem Zwischenkreiskondensator 5 bezogenen Stroms zu minimieren. Um das Spektrum der von dem Hochsetzsteller 43 ausgehenden Störemissionen zu verändern, werden die Pulsweiten der Einschaltpulse der Ansteuersignale 13 gegeneinander variiert. Diese Variationen erfolgen so, dass die Summe der Veränderungen, d. h. der Verlängerungen und Verkürzungen der einzelnen Pulsweiten, über eine Gruppe von Einschaltpulsen null ist. An diese Gruppe von Einschaltpulsen fügt sich eine weitere Gruppe von Einschaltpulsen an, über die die Summe der Veränderungen ebenfalls null ist. Zusätzlich ist diese nachfolgende Gruppe von Einschaltpulsen bezüglich ihrer Veränderungen der Pulsweiten gegenüber der vorherigen Gruppe variiert. Dabei betrifft diese zusätzliche Variation den Betrag der einzelnen Veränderungen der Pulsweiten und/oder das Vorzeichen der Veränderungen der einzelnen Pulsweiten und/oder die Reihenfolge der Veränderungen der einzelnen Pulsweiten innerhalb der Gruppe und/oder die Erstreckung der Gruppe, d. h. die Anzahl der Einschaltpulse, bis die Summe der Veränderungen null erreicht. Vorzugsweise unterscheiden sich auch hier die aufeinander folgenden Gruppen der Veränderungen nur durch einen Skalierungsfaktor, der von einer Variationsführungsfunktion mit einem Mittelwert von null vorgegeben wird.

### BEZUGSZEICHENLISTE

- 1: Hochsetzsteller
- 2: fliegender Kondensator
- 3: Photovoltaikgenerator
- 4: Ausgangsgleichspannung
- 5: eingangsseitiger Zwischenkreiskondensator
- 6: ausgangsseitiger Zwischenkreiskondensator
- 7: Leitung
- 8: Drossel
- 9: Hochsetzstellerdiode
- 10: weitere Hochsetzstellerdiode
- 11: Hochsetzstellerschalter
- 12: weiterer Hochsetzstellerschalter
- 13: Ansteuersignal
- 14: Ansteuersignal
- 15: Tiefsetzsteller
- 16: Tiefsetzstellerschalter
- 17: weiterer Tiefsetzstellerschalter
- 18: Tiefsetzstellerdiode
- 19: weitere Tiefsetzstellerdiode
- 20: Ansteuersignal
- 21: Ansteuersignal
- 22: DC/AC-Wandler
- 23: Halbbrücke
- 24: Halbleiterleistungsschalter
- 25: Halbleiterleistungsschalter
- 26: Halbleiterleistungsschalter
- 27: Halbleiterleistungsschalter
- 28: Freilaufdiode
- 29: Freilaufdiode
- 30: Freilaufdiode
- 31: Freilaufdiode
- 32: Mittelpunkt
- 33: Drossel
- 34: Halbbrücke
- 35: Kondensator
- 36: Kondensator
- 37: Mittelpunkt
- 38: Ansteuersignal
- 39: Ansteuersignal
- 40: Ansteuersignal
- 41: Ansteuersignal
- 42: Ausgangswechselspannung
- 43: Hochsetzsteller
- 44: Teilwandler
- 45: Teilwandler
- 46: Teilwandler
- 47: Teilwandler
- 48: Leitung

## Patentansprüche

1. Verfahren zur Reduktion von schaltfrequenten Störemissionen, bzw. Störemissionen bei Vielfachen der Schaltfrequenz eines Strom- oder Spannungswandlers (1, 15, 22, 43) mit mindestens einem mit einem Ansteuersignal (13, 14, 20, 21, 38 bis 41) angesteuerten Leistungsschalter (11, 12, 16, 17, 24 bis 27), wobei jedes Ansteuersignal (13, 14, 20, 21, 38 bis 41) untereinander beabstandete Einschaltpulse umfasst und eine feste Taktfrequenz aufweist,
- wobei Pulsweiten der Einschaltpulse moduliert werden, um eine Vorgabe für einen Strom oder eine Spannung (4) im oder am Strom- oder Spannungswandler (1, 15, 22, 43) zu erfüllen,
- wobei die Pulsweiten zusätzlich schneller und stärker variiert werden, als es zum Erfüllen der Vorgabe dienlich ist, um das Spektrum der Störemissionen zu verändern, und
- wobei Veränderungen der Pulsweiten bei ihrer zusätzlichen Variation gegenüber den Pulsweiten, die sich nur aufgrund ihrer Modulation zum Erfüllen der Vorgabe ergeben würden, auf Basis von aufeinander folgenden Gruppen von Veränderungen vorgenommen werden,
- die sich jeweils über eine vorgegebene Anzahl von aufeinander folgenden Einschaltpulsen erstrecken und
- in denen eine Summe der Veränderungen jeweils null ist,
**dadurch gekennzeichnet,**
- **dass** die aufeinander folgenden Gruppen von Veränderungen hinsichtlich von Beträgen der Veränderungen variiert werden und
- **dass** sich jede Gruppe der Veränderungen über eine gleiche Anzahl von aufeinander folgenden Einschaltpulsen erstreckt, wobei sich die Beträge der Veränderungen der aufeinander folgenden Gruppen der Veränderungen durch einen Skalierungsfaktor unterscheiden.

2. Verfahren nach Anspruch 1, **dadurch gekennzeichnet, dass** der Skalierungsfaktor durch eine zeitlich variable Variationsführungsfunktion vorgegeben wird.

3. Verfahren nach Anspruch 2, **dadurch gekennzeichnet, dass** die Variationsführungsfunktion einen Mittelwert von null aufweist, insbesondere eine Sinus- oder Dreiecksfunktion ist.

4. Verfahren nach einem der vorhergehenden Ansprüche, **dadurch gekennzeichnet, dass** sich die Variation der Gruppen der Veränderungen über mindestens 2 und maximal 50 aufeinander folgende Gruppen erstreckt.

5. Verfahren nach einem der vorhergehenden Ansprüche, **dadurch gekennzeichnet, dass** bei nur einem zum Erfüllen der Vorgabe angesteuerten Leistungsschalter die Anzahl der aufeinander folgenden Einschaltpulse jeder Gruppe der Veränderungen im Bereich von 2 bis 10 liegt.

6. Verfahren nach einem der vorhergehenden Ansprüche 1 bis 4, **dadurch gekennzeichnet, dass** die Anzahl der aufeinander folgenden Einschaltpulse, über die sich jede Gruppe der Veränderungen erstreckt, gleich einer Anzahl der Leistungsschalter (11, 12, 16, 17, 24 bis 27), die aufeinander abgestimmt zum Erfüllen der Vorgabe angesteuert werden, oder einem ganzzahligen Vielfachen davon ist.

7. Verfahren nach Anspruch 6, **dadurch gekennzeichnet, dass** die Anzahl der aufeinander folgenden Einschaltpulse jeder Gruppe der Veränderungen gleich dem 1- bis 5-fachen der Anzahl der Leistungsschalter (11, 12, 16, 17, 24 bis 27) ist, die aufeinander abgestimmt zum Erfüllen der Vorgabe angesteuert werden.

8. Verfahren nach Anspruch 6 oder 7, **dadurch gekennzeichnet, dass** die mehreren zum Erfüllen der Vorgabe angesteuerten Leistungsschalter Leistungsschalter (11) von parallel geschalteten und im Interleavingmode betriebenen Teilwandlern (44 bis 47) eines Wandlers (43) sind.

9. Verfahren nach Anspruch 6 oder 7, **dadurch gekennzeichnet, dass** zwei zum Erfüllen der Vorgabe angesteuerte Leistungsschalter Leistungsschalter (24 und 25 bzw. 26 und 27) einer Halbbrücke (23) mit fliegendem Kondensator (2) sind.

10. Verfahren nach Anspruch 5 oder 7, **dadurch gekennzeichnet, dass** zwei zum Erfüllen der Vorgabe angesteuerte Leistungsschalter die beiden Leistungsschalter (11 und 12 bzw. 15 und 16) eines DC/DC-Wandlers mit fliegendem Kondensator (2), insbesondere eines Hochsetzund/oder Tiefsetzstellers (1, 15) sind.

11. Verfahren nach Anspruch 10, **dadurch gekennzeichnet, dass** die Veränderungen innerhalb jeder Gruppe jeweils einen gleichen Betrag und ein wechselndes Vorzeichen aufweisen, wobei jede Gruppe je einen Einschaltpuls für die beiden Leistungsschalter (11, 12) eines Hochsetzstellers (1) mit fliegendem Kondensator (2) umfasst.

12. Verfahren nach einem der vorhergehenden Ansprüche, **dadurch gekennzeichnet, dass** eine Pulsposition der Einschaltpulse innerhalb einer Taktperiode des jeweiligen Ansteuersignals (13, 14, 20, 21, 38 bis 41) zumindest im zeitlichen Mittel fest ist.

## Claims

1. A method for reducing switching frequency spurious emissions, or spurious emissions at multiples of the switching frequency, of a current or voltage converter (1, 15, 22, 43) having at least one power switch (11, 12, 16, 17, 24 to 27) which is actuated with an actuating signal (13, 14, 20, 21, 38 to 41), wherein each actuating signal (13, 14, 20, 21, 38 to 41) comprises switch-on pulses spaced apart from one another and has a fixed clock frequency,
- wherein pulse widths of the switch-on pulses are modulated in order to meet a setpoint for a current or a voltage (4) in or at the current or voltage converter (1, 15, 22, 43),
- wherein the pulse widths are additionally varied more quickly and more strongly than is appropriate for meeting the setpoint in order to change the spectrum of the spurious emissions, and
- wherein changes to the pulse widths in their additional variation as compared to the pulse widths which would result only owing to their modulation to meet the setpoint are made on the basis of successive groups of changes,
- which each extend over a predefined number of successive switch-on pulses, and
- in which a sum of the changes is zero in each case,
**characterized in**
- **that** the successive groups of changes are varied with respect to absolute values of the changes, and
- **that** each group of changes extends over the same number of successive switch-on pulses, whererin the absolute values of the changes of successive groups of changes differ by a scaling factor.

2. The method as claimed in claim 1, **characterized in that** the scaling factor is predefined by a variation control function which is variable over time.

3. The method as claimed in claim 2, **characterized in that** the variation control function has a mean value of zero and in particular is a sine function or triangle function.

4. The method as claimed in one of the preceding claims, **characterized in that** the variation in the groups of changes extends over at least 2 and at most 50 successive groups.

5. The method as claimed in one of the preceding claims, **characterized in that** when there is just one power switch which is actuated in order to meet the setpoint, the number of successive switch-on pulses of each group of the changes is the range from 2 to 10.

6. The method as claimed in one of the preceding claims 1 to 4, **characterized in that** the number of the successive switch-on pulses over which each group of changes extends is equal to the number of power switches (11, 12, 16, 17, 24 to 27) which are actuated in coordination with one another in order to meet the setpoint, or an integral multiple thereof.

7. The method as claimed in claim 6, **characterized in that** the number of successive switch-on pulses of each group of changes is equal to 1 to 5 times the number of the power switches (11, 12, 16, 17, 24 to 27) which are actuated in coordination with one another in order to meet the setpoint.

8. The method as claimed in claim 6 or 7, **characterized in that** the plurality of power switches which are actuated in order to meet the setpoint are power switches (11) of partial converters (44 to 47) of a converter (43) which are connected in parallel and operated in an interleaving mode.

9. The method as claimed in claim 6 or 7, **characterized in that** two power switches which are actuated in order to meet the setpoint are power switches (24, 25 or 26, 27) of a half bridge (23) with a flying capacitor (2).

10. The method as claimed in claim 5 or 7, **characterized in that** two power switches which are actuated in order to meet the setpoint are the two power switches (11, 12 or 15, 16) of a DC/DC converter with a flying capacitor (2), in particular of a boost and/or a buck converter (1, 15).

11. The method as claimed in claim 10, **characterized in that** the changes within each group have in each case the same absolute value and a changing sign, each group comprising in each case a switch-on pulse for the two power switches (11, 12) of the boost converter (1) with a flying capacitor (2).

12. The method as claimed one of the preceding claims, **characterized in that** a pulse position of the switch-on pulses is fixed at least when averaged over time within a clock period of the respective actuating signal (13, 14, 20, 21, 38 bis 41).

## Revendications

1. Procédé de réduction des émissions parasites à la fréquence de commutation, ou des émissions parasites aux multiples de la fréquence de commutation, d'un convertisseur de courant ou de tension (1, 15, 22, 43) comprenant au moins un commutateur de puissance (11, 12, 16, 17, 24 à 27) amorcé par au moins un signal d'amorçage (13, 14, 20, 21, 38 à 41), chaque signal d'amorçage (13, 14, 20, 21, 38 à 41) comprenant des impulsions de mise en circuit espacées les unes des autres et possédant une fréquence d'horloge fixe,
- les largeurs d'impulsion des impulsions de mise en circuit étant modulées afin de répondre à une indication préalable pour un courant ou une tension (4) dans le convertisseur de courant ou de tension (1, 15, 22, 43) ou au niveau de celui-ci,
- les largeurs d'impulsion étant en plus soumises à une variation plus rapide et plus forte que ce qui serait utile pour répondre à l'indication préalable afin de modifier le spectre des émissions parasites, et
- des modifications des largeurs d'impulsion lors de leur variation supplémentaire par rapport aux largeurs d'impulsion qui résulteraient uniquement en raison de leur modulation destinée à répondre à l'indication préalable étant effectuées sur la base de groupes successifs de modifications,
- qui s'étendent respectivement sur un nombre prédéfini d'impulsions de mise en circuit successives et
- dans lesquels une somme des modifications est à chaque fois égale à zéro,
**caractérisé en ce**
- **que** les groupes successifs de modifications sont soumis à des variations concernant les valeurs des modifications et
- **que** chaque groupe des modifications s'étend sur un même nombre d'impulsions de mise en circuit successives, les valeurs des modifications des groupes des modifications successifs se différenciant par un facteur d'échelle.

2. Procédé selon la revendication 1, **caractérisé en ce que** le facteur d'échelle est prédéfini par une fonction de gestion de variation variable dans le temps.

3. Procédé selon la revendication 2, **caractérisé en ce que** la fonction de gestion de variation possède une valeur centrale égale à zéro, notamment qu'elle est une fonction sinusoïdale ou triangulaire.

4. Procédé selon l'une des revendications précédentes, **caractérisé en ce que** la variation des groupes des modifications s'étend sur un minimum de 2 et un maximum de 50 groupes successifs.

5. Procédé selon l'une des revendications précédentes, **caractérisé en ce qu'**en présence d'un seul commutateur de puissance amorcé pour répondre à l'indication préalable, le nombre des impulsions de mise en circuit successives de chaque groupe des modifications se trouve dans la plage de 2 à 10.

6. Procédé selon l'une des revendications 1 à 4, **caractérisé en ce que** le nombre des impulsions de mise en circuit successives sur lesquelles s'étend chaque groupe des modifications est égal à un nombre des commutateurs de puissance (11, 12, 16, 17, 24 à 27) qui sont amorcés de manière coordonnée les uns sur les autres pour répondre à l'indication préalable, ou à un multiple entier de celui-ci.

7. Procédé selon la revendication 6, **caractérisé en ce que** le nombre des impulsions de mise en circuit successives de chaque groupe des modifications est égal à 1 à 5 fois le nombre des commutateurs de puissance (11, 12, 16, 17, 24 à 27) qui sont amorcés de manière coordonnée les uns sur les autres pour répondre à l'indication préalable.

8. Procédé selon la revendication 6 ou 7, **caractérisé en ce que** les plusieurs commutateurs de puissance amorcés pour répondre à l'indication préalable sont des commutateurs de puissance (11) de convertisseurs partiels (44 à 47) d'un convertisseur (43) qui sont branchés en parallèle et qui fonctionnent en mode d'entrelacement.

9. Procédé selon la revendication 6 ou 7, **caractérisé en ce que** deux commutateurs de puissance amorcés pour répondre à l'indication préalable sont des commutateurs de puissance (24 et 25 ou 26 et 27) d'un demi-pont (23) à condensateur flottant (2).

10. Procédé selon la revendication 5 ou 7, **caractérisé en ce que** deux commutateurs de puissance amorcés pour répondre à l'indication préalable sont les deux commutateurs de puissance (11 et 12 ou 15 et 16) d'un convertisseur CC/CC à condensateur flottant (2), notamment d'un convertisseur élévateur et/ou abaisseur (1, 15).

11. Procédé selon la revendication 10, **caractérisé en ce que** les modifications à l'intérieur de chaque groupe possèdent respectivement une même valeur et un signe alterné, chaque groupe comportant respectivement une impulsion de mise en circuit pour les deux commutateurs de puissance (11, 12) d'un convertisseur élévateur (1) à condensateur flottant (2).

12. Procédé selon l'une des revendications précédentes, **caractérisé en ce qu'**une position d'impulsion de l'impulsion de mise en circuit est fixe, au moyen en moyenne dans le temps, à l'intérieur d'une période d'horloge du signal d'amorçage (13, 14, 20, 21, 38 à 41) respectif.
